# EUROPÄISCHE PATENTSCHRIFT

(11) **EP 1 552 198 B1**
(45) Veröffentlichungstag und Bekanntmachung des Hinweises auf die Patenterteilung: **05.11.2008**
(21) Anmeldenummer: 03773543.8
(22) Anmeldetag: 15.10.2003
(51) Int. Cl.: F16K 31/06, F15B 13/04, F15B 13/044

(54) **STEUERBARES MAGNETVENTIL**
CONTROLLABLE SOLENOID VALVE
ELECTROVANNE REGLABLE

(30) Priorität: 15.10.2002 DE 10248501
(43) Veröffentlichungstag der Anmeldung: 13.07.2005
(73) Patentinhaber: Rausch & Pausch GmbH, 95100 Selb (DE)
(72) Erfinder: DÖHLA, Werner, 95482 Gefrees (DE); RAUCH, Michael, 95168 Marktleuthen (DE)
(74) Vertreter: Bock, Gerhard
(86) Internationale Anmeldenummer: PCT/DE2003/003449
(87) Internationale Veröffentlichungsnummer: WO 2004/036057

(56) Entgegenhaltungen:
- DE-A- 3 722 344
- US-B1- 6 412 884

## Beschreibung

Die Erfindung betrifft ein steuerbares Magnetventil gemäß der Gattung der beigefügten Patentansprüche. Derartige Ventile finden überall da Anwendung, wo es um das gezielte Beeinflussen der Ablaufgeschwindigkeit von Zylindersteuerungen in hydraulischen Antrieben geht, insbesondere bei automatischen Cabrio-Verdeckabläufen.

Bei der Steuerung von Cabrio-Verdeckabläufen werden 3/2 Magnetventile in Sitzbauweise verwendet, wie sie bspw. in der DE 3722344 A1 beschrieben sind. Ein zusätzliches Rückschlagventil kann zur Verhinderung von Rückströmungen am Pumpenanschluss eingesetzt oder auch teilweise in das Magnetsitzventil integriert sein, siehe EP 0 565 190 A1. Die Bewegungsabläufe werden im Anwendungsfall durch Gewichts- und Kinematikkräfte bestimmt. In bestimmten Positionen erfolgt bereits eine Bewegung durch das Eigengewicht des Verdecks. Dadurch ergeben sich unerwünscht hohe Bewegungsgeschwindigkeiten und ein ungebremste Einfahren in die Anschläge, was zu störenden Geräuschen und Rückprallen führt.
Die Anschlaggeräusche werden in den Fahrzeugen durch Feder- oder Pufferelemente nur sehr unvollkommen reduziert. Als hydraulische Dämpfungsmittel sind feste Drosseln im Tankanschluss des jeweiligen Zylinders bekannt. Die hydraulische Drosselung hat mehrere Nachteile. Da die Drosselwirkung über den gesamten Bewegungsbereich die Gleiche bleibt, stellt sie einen Kompromiss dar; entweder wird ein schneller Gesamtbewegungsablauf und ein relativ ungebremstes Einfahren in die Endlagen erreicht oder ein insgesamt langsamer Bewegungsablauf mit relativ weichem Aufprall. Zudem ist die Abstimmung der hydraulischen Drosseln ein aufwändiger und langwieriger Prozess, weil einmal produzierte Bauteile nicht mehr verändert werden können. Innerhalb der Ventilverschaltung sind zumeist verschiedene Drosselquerschnitte erforderlich, um einen optimalen Ablauf zu erzielen. Dies bedeutet die kostenseitig ungünstige Variantenbildung und die Gefahr von Vertauschungen im Herstellungsprozess und damit erhöhte Aufwendungen. Weiterhin ist die starre Abstimmung grundsätzlich nur für einen bestimmten Anwendungsfall geeignet, jede neue Anwendung erfordert neue Bauteile.
Als weitere hydraulische Lösung kann auch ein regelbares Druckbegrenzungsventil in den Tankanschluss eines Zylinders eingeführt werden. Dadurch wird ein Gegendruck aufgebaut, der ebenfalls die Verdrängung von Öl aus der Zylinderkammer abbremst. Dies bedeutet jedoch ein zusätzliches Magnetventil mit einem entsprechenden Aufwand an Bauraum, elektrischer Energie und Ansteuerelektronik. US 6412884 offenbart auch ein steuerbares Magnetventil.

Die Erfindung soll die aufgezeigten Mängel beseitigen und auf einfache Weise ein gezieltes, reproduzierbares Beeinflussen der Ablaufgeschwindigkeit von Zylindersteuerungen in hydraulischen Antrieben ermöglichen sowie unkontrollierte Bewegungen durch diese Antriebe vermeiden.

Gemäß der Erfindung wird diese Aufgabe durch die kennzeichnenden Merkmale des ersten Patentanspruchs gelöst. Durch die Merkmale der Unteransprüche wird die Erfindung vorteilhaft ausgestaltet bzw. konkretisiert. Die Wählbarkeit und Veränderbarkeit elektrischen Ansteuerung und die Modifizierung eines Magnetsitzventils führen zu einer erheblich vereinfachten und sicher arbeitenden Gestaltung einer Zylindersteuerung für hydraulische Antriebe. Sie ermöglicht darüber hinaus die Darstellung eines Proportionalverhaltens der Drosselung eines Flüssigkeitsstromes.
Im Drosselungsbereich arbeitet der Magnet des Magnetventils gegen eine relativ steife Feder (ca. 5 bis 20 N/mm). Durch die Bestromung der Magnetspule wird die Position des Ventilschließkörpers bzw. Dichtkörpers bestimmt. Dabei kann die Anordnung grundsätzlich so getroffen sein, dass im stromlosen Zustand des Elektromagneten die Verbindung zweier Anschlussöffnungen des Magnetventils entweder geöffnet oder geschlossen ist. Wenn bei einem entsprechenden Ventil die Verbindung der beiden Anschlussöffnungen im stromlosen Zustand des Elektromagneten geöffnet und die Druckfeder ihre größte Ausdehnung hat, so verschließt der mit dem Magnetanker verbundene Schieber oder Kolben mit zunehmendem Strom radial gerichtete Durchlässe (Bohrungen, Langlöcher o. dgl.) und reduziert damit einen zwischen den Anschlussöffnungen bestehenden Stömungsquerschnitt. Die Drosselwirkung steigt, und die Zylinderbewegung wird gezielt beeinflusst. Am Ende des Regelbereichs sind nur noch Spaltleckagen wischen beiden Anschlussöffnungen des Ventils möglich. Diese Erfindung umfasst auch die Möglichkeit, dass nur ein Durchlass oder unterschiedliche Durchlässe in einem zylindrischen Gehäuse vom Schieber verschlossen werden.

Der Schieber bewegt sich beim vorstehend beschriebenen Prozess im zylindrischen Innenraum eines Gehäuses eines Magnetventils, das vorzugsweise ein 3/2- oder 2/2-Magnetventil sein kann, an dessen einem Ende sich der Elektromagnet und an dessen anderem Ende in Verlägerung des zylindrischen Innenraums sich ein Pumpenanschluss befindet. Bei einem festen, maximalen Schaltstrom überwindet der Magnetantrieb des Schiebers die Druckkräfte am Pumpenanschluss und schafft damit die Verbindung zwischen dem Pumpenanschluss und der diesem am nächsten gelegenen radialen Anschlussöffnung im Gehäuse. Gleichzeitig wird die Verbindung zwischen den beiden radialen Anschlussöffnungen durch ein weiteres Dichtelement so unterbrochen, dass auch Leckagen vermieden werden. Ein angesteuerter Zylinder kann dann in die Gegenrichtung bewegt werden.

Durch die Erfindung wird die Regelfunktion ohne zusätzliche Magnetventile und bei geringstmöglichem Raumbedarf erreicht. Sie sichert bei der Herstellung einen hohen Wiederholteilgrad und bei Nachrüstungen die einfache Austauschbarkeit. Veränderungen im Bewegungsablauf oder Optimierungen sind allein durch Anpassung der elektrischen bzw. elektronischen Ansteuerung auch an bereits installierten Geräten möglich. Justierungen und Feinabstimmungen können im Fertigungsprozess mit Hilfe eines Justierelements am Schieber vorgenommen werden. Die elektrisch einstellbare Drosselung lässt einen vielseitigen Einsatz der Erfindung für anstehende Steuerungsaufgaben zu, sofern ein Magnetventil verwendet wird.

Die Erfindung und ihre Anwendung wird nachstehend an Hand dreier Ausführungsbeispiele in der schematischen Zeichnung näher erläutert. Es zeigen:
- Fig. 1: ein erfindungsgemäßes Magnetventil in einem Axialschnitt und im stromlosen Zustand,
- Fig. 2: das erfindungsgemäße Magnetventil nach Fig. 1 bei geringer Bestromung,
- Fig. 3: das erfindungsgemäße Magnetventil nach Fig. 1 bei mittlerer Bestromung,
- Fig. 4: das erfindungsgemäße Magnetventil nach Fig. 1 bei starker Bestromung,
- Fig. 5: das erfindungsgemäße Magnetventil nach Fig. 1 bei maximaler Bestromung,
- Fig. 6: ein Diagramm zur Abhängigkeit des Durchflusses vom Spulenstrom,
- Fig. 7: ein Diagramm zur Abhängigkeit der Schieberposition vom Spulenstrom,
- Fig. 8: ein erstes Anwendungsbeispiel für das erfindungsgemäße Magnetventil und
- Fig. 9: ein zweites Anwendungsbeispiel für das erfindungsgemäße Magnetventil.

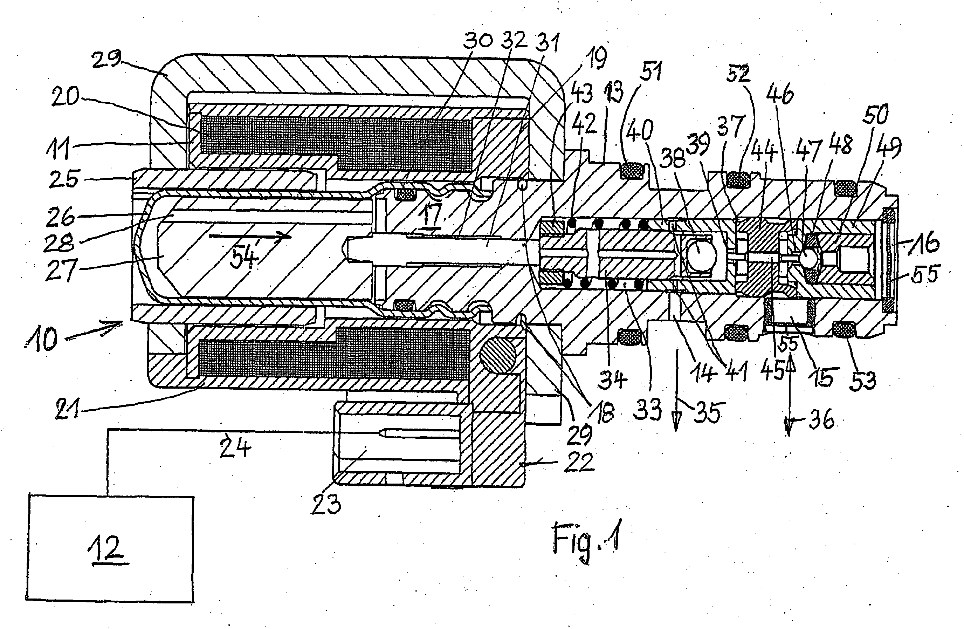

In Fig. 1 ist ein Magnetventil 10 dargestellt, das grundsätzlich aus einem Elektromagneten 11 mit einer elektrischen Steuereinrichtung 12 und einem Gehäuse 13 mit Anschlussöffnungen 14, 15 sowie einem Anschluss 16 besteht. Mit einem dem Anschluss 16 gegenüber liegenden Ende 17 ragt das Gehäuse 13 in den Elektromagneten 11 hinein und ist an diesem durch Stifte 18 oder Schrauben befestigt. Beide Bauteile 11 und 13 könnten auch durch eine Verschraubung miteinander verbunden sein.
Der Elektromagnet 11 besteht aus einer auf einen hohlen Wicklungsträger 19 aus Isolationsmaterial bestehenden, gewickelten Drahtspule 20, die bei Bestromung ein von dieser Bestromung abhängiges Magnetfeld erzeugt. Entlang ihrer Peripherie ist die Spule 20 mit einer elektrisch isolierenden und wärmeableitenden Umspritzung 21 versehen. An einem Ansatz 22 des Wicklungsträgers 19 ist eine Steckverbindung 23 für eine Leitung 24 zur elektrischen Steuereinrichtung 12 vorgesehen, welche die Spule 20 mit Strom wechselnder Stärke versorgt.
In den Wicklungsträger 19 ist eine Hülse 25 eingepasst, in der sich ein einerseits mit dem Ende 17 des Gehäuses 13 fest verbundenes und andererseits geschlossenes Führungsrohr 26 für einen Anker 27 des Elektromagneten 11 befindet. Die feste Verbindung zwischen dem Gehäuse 13 und dem Führungsrohr 26 wird durch einen Dichtring 30 abgedichtet. Der Anker 27 besitzt eine Längsbohrung 28 zum Druckausgleich zwischen den Räumen vor und hinter dem Anker. Ein Bügel 29 kontaktiert das aus dem Elektromagneten 11 herausragende Ende der Hülse 25 und umschließt die isolierte Drahtspule 20 zumindest teilweise so, dass er auch das Ventilgehäuse 13 kontaktiert. Die Hülse 25 leitet den Magnetfluss vom Bügel 29 auf den Anker 27 über. Der Bügel 29 sorgt für die Weiterleitung der Magnetkraft auf das Gehäuse 13 und für den magnetischen Rückfluss. Die dem Anker 27 zugewandte Stirnfläche des Gehäuses 13 ist zur günstigen Beeiflussung der magnetischen Kräfte optimal gestaltet. Die Bauelemente 25, 29, 13, 27 bilden einen Magnetkreis.
Am Anker 27 ist bspw. durch Verschraubung ein Stift 31 befestigt, der durch eine Axialbohrung 32 im Gehäuse 13 in einen ebenfalls axial gerichteten zylindrischen Innenraum 33 hineinragt und dort einen Schieber 34 betätigt. Der Innenraum 33, in welchen die Anschlussöffnungen 14, 15 zum Tankrücklauf 35 bzw. zum Zylinder (Verbraucher) 36 hineinführen, besitzt zwischen den Anschlussöffnungen eine ringförmige Schulter 37, die durch eine Erweiterung des Innenraums 33 in Richtung des Anschlusses 16 der Pumpe gebildet wird. Der Anschlussöffnung 15 und dem Anschluss 16 sind Siebe 55 zugeordnet, die verhindern sollen, dass Verunreinigungen mit der Flüssigkeit ins Ventl 10 gelangen.
Der Schieber 34 ist an seinem dem Stift 31 entgegengesetzten Ende mit einer Dichtkugel (Dichtelement) 38 versehen, zu der ein (zweiter) Dichtsitz 39 gehört, welcher an einem sich axial erstreckenden, zum Elektromagneten 11 hin offenen Zylinder 40 als Frontstück befestigt ist. In den im Innenraum 33 fest angeordneten offenen Zylinder 40, der mit radialen Bohrungen 41 (Löchern, Langlöchern, Durchlässe odgl.) versehen ist, die aus strömungstechnischern Gründen unterschiedliche Durchmesser haben können, ragt der Schieber 34 zum Zwecke seiner Führung teilweise hinein, so dass er die radialen Bohrungen 41 im unbestromten Zustand des Elektromagneten 11 frei gibt und im stark bestromten Zustand verschließt. Der Schieber 34 ist von einer Schraubenfeder 42 umgeben, die sich einerseits gegen den Zylinder 40 und andererseits gegen ein Justierelement 43 abstützt, welches auf das stiftseitige Ende des Schiebers aufgeschraubt ist. Die Befestigung des Justierelements 43 am Schieber 34 kann auch in anderer Weise vorgenommen werden. Ebenso muss die Feder 42 nicht grundsätzlich Schraubenfeder ausgebildet und um den Schieber 34 herum angeordnet sein. Sie kann bspw. auch um den Anker des Elektromagneten gelegt sein.
Gegen die Schulter 37 ist ein mit Flüssigkeitskanälen versehener Führungskörper 44 für einen axial angordneten und verschiebbaren Stößel 45 gedrückt, der einerseits im Dichtsitz 39 und andererseits in einem (zweiten) Dichtsitz 46 für eine weitere Dichtkugel (Dichtkörper) 47 endet und im Bedarfsfall auf die Dichtkugel 47 einwirkt. Diese wird von einer Kugelführung 48 gehalten, die sich in einem Zylinder 49 befindet, der am Dichtsitz 46 befestigt und zum Pumpenanschluss 16 hin offen ist. Der Zylinder 49 ist in den erweiterten Innenraum 33 eingepasst und enthält selbst nochmals einen Dichtsitz 50 für die Dichtkugel 47, die vom Pumpendruck vom Dichtsitz 50 abgehoben wird. Am Gehäuse 13 sind außerdem Dichtringe 51, 52, 53 für die Einpassung des Magnetventils 10 in ein nicht dargestelltes Gerät vorgesehen. Dabei wirkt der Dichtring 51 nach außen, der Dichtring 52 zur Abdichtung zwischen den beiden Anschlussöffnungen 14 und 15 und der Dichtring 53 zur Abdichtung zwischen der Anschlussöffnung 15 und dem Anschluss 16.
Anker 27, Stift 31 und Schieber 34 sind im Wesentlichen koaxial zu einer gemeinsamen geometrischen Achse angeordnet, wobei der Stift 31 in eine Ausnehmung am Anker 27 hinein ragt und durch die Feder 42 im ständigen, kraftschlüssigen Kontakt mit dem Anker 27 gehalten wird. Andere Verbindungen als die dargestellten zwischen den einzelnen Bauelementen sind möglich.

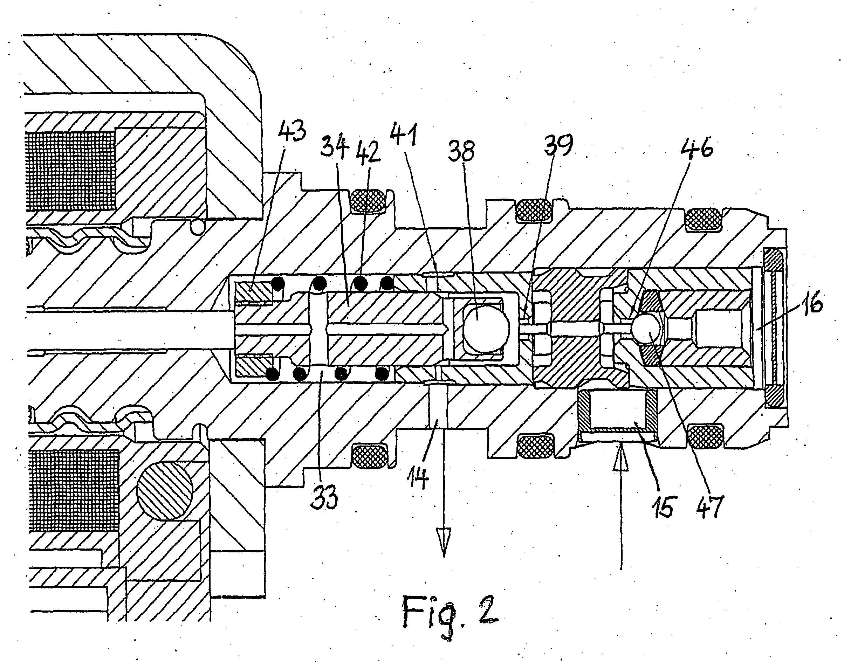

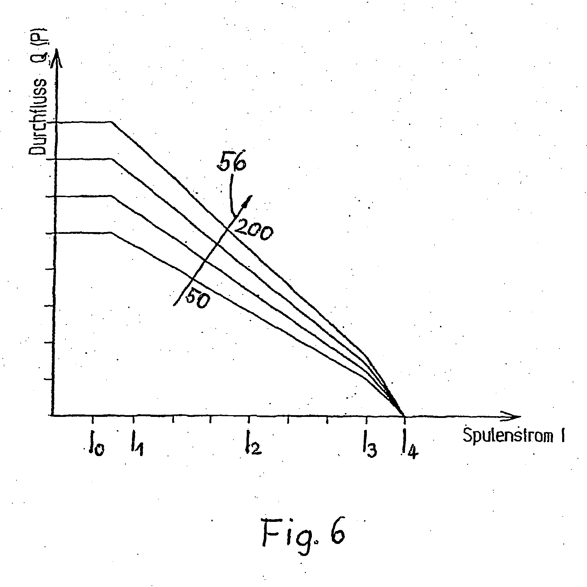

In der Darstellung der Fig. 1 ist das Magnetventil 10 nicht unter Srom (I₀ in Fig. 6). Der Elektromagnet 11 ist nicht eingeschaltet, der Anker 27 befindet sich in der dargestellten Lage, das Justierelement 43 kontaktiert die zugehörige Frontfläche des zylindrischen Innenraumes 33, die radialen Bohrungen 41 sind vollständig geöffnet, ein Medienstrom kann ungehindert von der Anschlussöffnung 15 durch den Dichtsitz 39 zur Anschlussöffnung 14 fließen. Beim Einschalten eines Stroms I über die Steuereinrichtung 12 bewegt sich der Anker 27 in der durch einen Pfeil 54 angezeigten Richtung. Wird zunächst ein für das Ventil 10 kleiner Strom I₁ (Fig. 6) eingeschaltet, ist das Magnetventil 10 leicht bestromt, so bewegt sich der Anker 27 auch nur um einen kleinen Betrag in Pfeilrichtung 54, bis sich die Magnetkraft und die Kraft der Feder 42 die Waage halten. Dieser Zustand ist in Fig. 2 dargestellt, in der das Justierelement 43 von der zugehörigen Frontfläche des Innenraumes 33 abgehoben ist, die größere der Radialbohrungen 41 durch die Verstellung des Schiebers 34 teilweise verschlossen, der Durchfluss der Flüssigkeit von der Anschlussöffnung 15 zur Anschlussöffnung 14 durch das Ventil 10 ist leicht gedrosselt. Die Dichtkugel 38 ist noch weit vom zugehörigen Dichtsitz 39 entfernt, während die Dichtkugel 47 sich im Dichtsitz 46 befindet und einen Durchfluss von der Anschlussöffnung 15 zum Anschluss 16 verhindert.

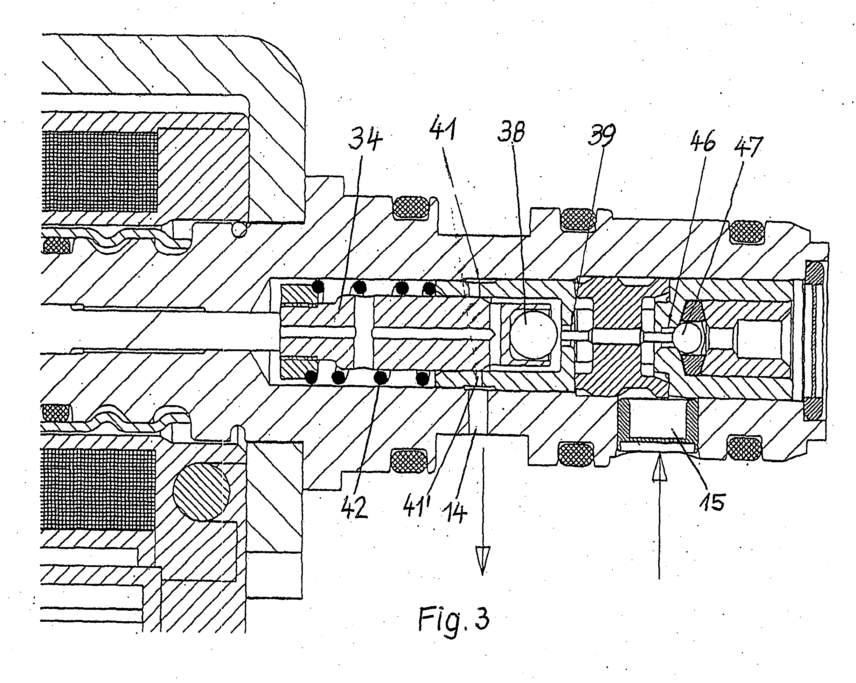

Bei Einschaltung eines für das Ventil 10 mittleren Stroms I₂ mit Hilfe der Steuereinrichtung 12, so ist das Magnetventil 10 gemäß der Darstellung der Fig. 3 mittel bestromt. Der Anker 27 und mit ihm der Schieber 34 bewegen sich infolge der nunmehr wirkenden Magnetkraft und der Gegenkraft der Feder 42 in eine Gleichgewichtslage, in der die große Radialbohrung 41 völlig und die kleine, in Fig. 3 mit 41' bezeichnete Radialbohrung teilweise durch den Schieber 34 verschlossen ist. Somit erfährt der Durchfluss der Flüssigkeit von der Anschlussöffnung 15 zur Anschlussöffnung 14 eine stärkere (mittlere) Drosselung als in Fig. 2. Die Dichtkugel 38 befindet sich noch nicht im zugehörigen Dichtsitz 39 und die Dichtkugel 47 verschließt unverändert den Dichtsitz 46.

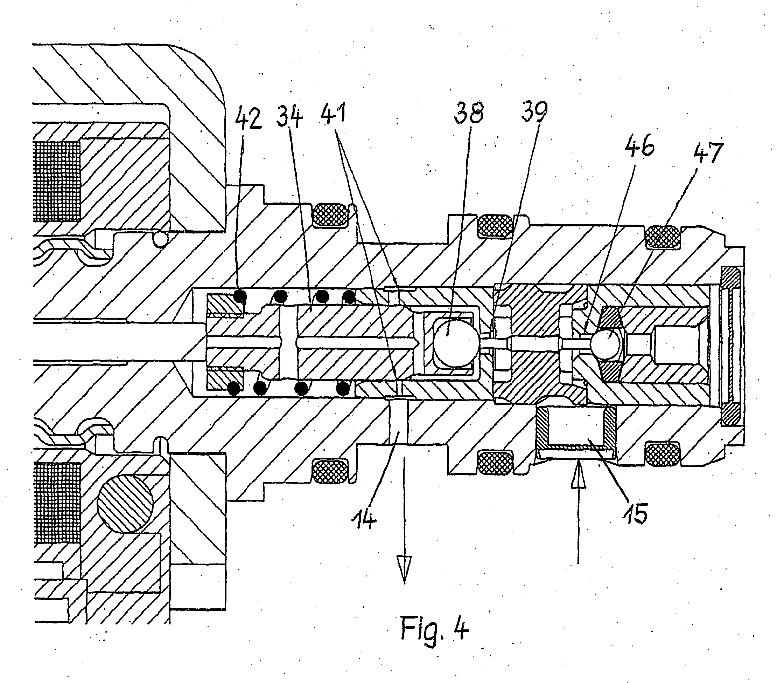

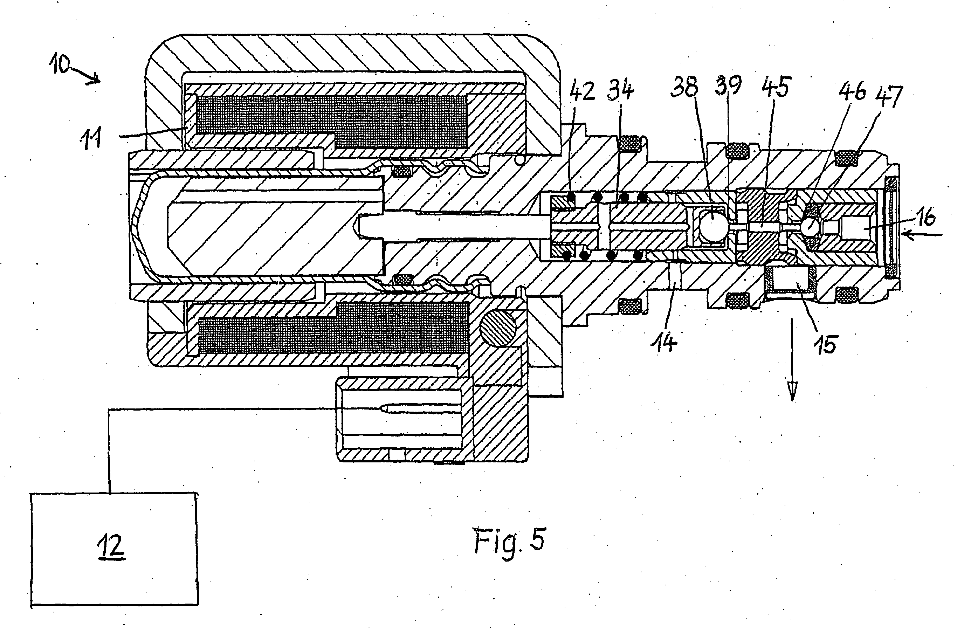

Beim Einschalten eines für das Magnetventil 10 als stark anzusehenden Stroms I₃ stellt sich eine Gleichgewichtslage zwischen der Magnetkraft und der Federkraft erst dann ein, wenn der Schieber 34 beide Radialbohrungen 41 komplett verschließt. Der Dichtsitz 39 wird von der Dichtkugel 38 noch nicht verschlossen und die Dichtkugel 47 befindet sich noch im Dichtsitz 46. In diesem stark bestromten Zustand des Magnetventils 10 ist der Durchfluss von der Anschlussöffnung 15 zur Anschlussöffnung 14 derart gedrosselt, dass nur noch Leckflüssigkeit fließt, was aus Fig. 4 ersichtlich ist.
Wird das Magnetventil 10 mit Hilfe der Steuereinrichtung 12 maximal Mit einem Strom I₄ bestromt, so überwindet die Kraft des Elektromagneten 11 die Kraft der Schraubenfeder 42 vollständig und drückt, wie in Fig. 5 dargestellt, über den Schieber 34 die Dichtkugel 38 gegen den Dichtsitz 39. Gleichzeitig drückt die Kugel 36 mit Hilfe des Stößels 45 die Kugel 47 aus ihrem Dichtsitz 46 heraus, so dass der Durchfluss von der Anschlussöffnung 15 zur Anschlussöffnung 14 vollständig unterbrochen und der Durchfluss vom Anschluss 16 zur Anschlussöffnung 15 geöffnet ist. In dem Fall könnte ein angesteuerter Zylinder in Gegenrichtung betrieben werden.
Es versteht sich von selbst, dass die in den Figuren 2 bis 5 dargestellten Zustände nur beispielhaft aufgeführt sind, dass die Stufungen wesentlich feiner oder auch grober oder auch willkürlich, der Verwendung und dem Bedarf angepasst unterschiedlich sein können. Ebenso kann die Steuerung und damit die Verstellung des Ankers 27 bzw. Schiebers 34 kontinuierlich oder diskontinuierlich erfolgen.

In Fig. 6 ist der Durchfluss Q (P) zwischen den Anschlussöffnungen 15 und 14 über dem jeweils zugehörigen Spulenstrom an Hand eines Diagramms dargestellt. Dabei ist deutlich, dass sich in Abhängigkeit von der Durchflussmenge eine in Richtung eines Pfeiles 56 zunehmende Druckdifferenz zwischen den Anschlussöffnungen 15 und 14 aufbaut. Beim vorliegenden Magnetventil 10 kann der Druck von 50 bar bei der kleinsten Durchflussmenge auf 200 bar bei der größten Durchflussmenge steigen.

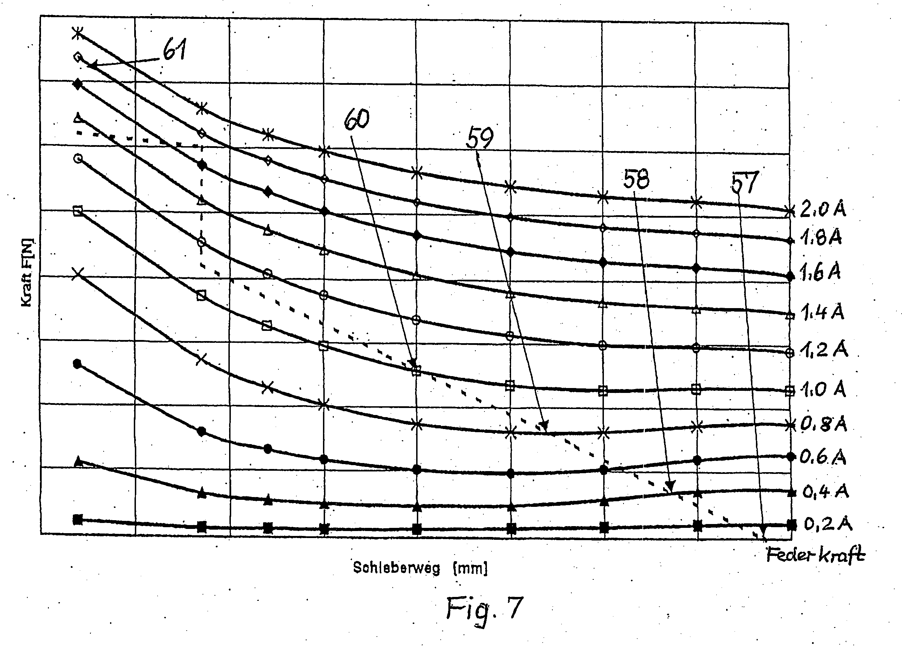

Das in Fig. 7 dargestellte Diagramm, in dem die Stromstärke, mit 0,2 A beginnend, bis zu 2 A in 0,2 Ampere-Stufen erhöht wird, lässt deutlich die Positionen 57 - 60 des Schiebers 34 erkennen, in denen die Magnetkraft und die Schraubenfederkraft im Gleichgewicht sind und die den Figuren 1 bis 4 entsprechen. In Position 57 befindet sich demnach das Magnetventil 10 im stromlosen Zustand, in welchem der Durchfluss von der Anschlussöffnung 15 zur Anschlussöffnung 14 ungedrosselt und der Durchfluss vom Anschluss 16 zur Anschlussöffnung 15 gesperrt ist. Während der Durchfluss in den weitem Positionen 58, 59, 60 durch die leichte, mittlere und starke Bestromung der Drahtspule 20 mit den Strömen I₁, I₂, I₃ immer mehr gedrosselt wird, bleibt die Durchflussverbindung zwischen dem Anschluss 16 und der Anschlussöffnung 15 gesperrt. Erst in der Position 61, in der es nicht mehr um ein Gleichgewicht der Kräfte des Elektromagneten 11 und der Schraubenfeder 42 geht, findet durch die überwiegende Magnetkraft eine endgültige Sperrung der Durchflussverbindung zwischen den Anschlussöffnungen 15 und 14 und eine Öffnung der Durchflussverbindung zwischen dem Anschluss 16 und der Anschlussöffnung 15 statt. Wenn bspw. der Gesamtweg des Schiebers 34 von der Position 57 bis zur Position 61 ca. 1 mm beträgt und der Teilweg von der Position 60 zur Position 61 ca. 0,3 mm, so lässt der kürzere Schieberweg geringere Prallwirkungen und ein sanfteres Einlaufen des Schiebers 34 in die Position 61 erwarten.

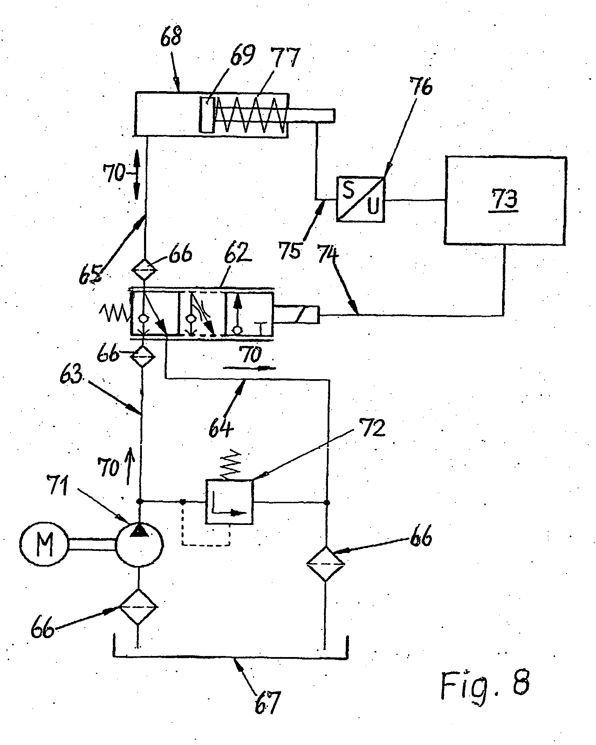

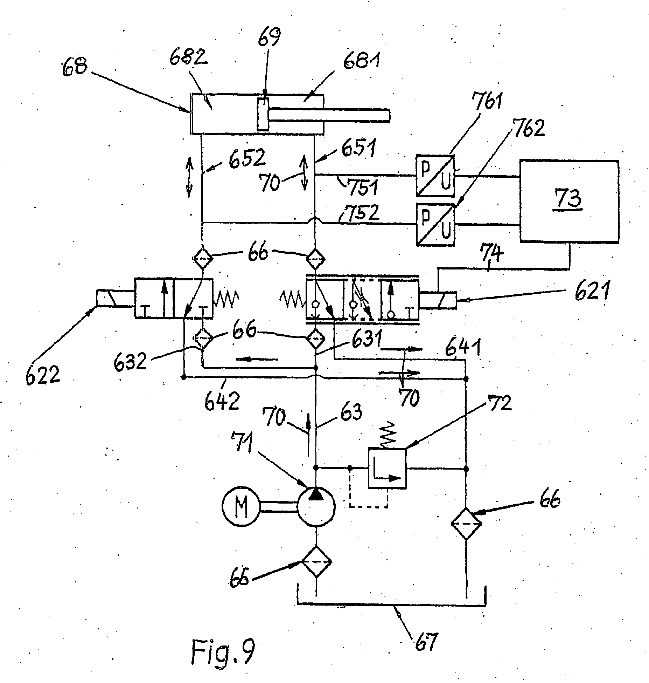

In den Figuren 8 und 9 sind zwei Anwendungsbeispiele der erfindungsgemäßen Ventilanordnung zur geschwindigkeitsabhängigen bzw. druckabhängigen Regelung der Relativbewegung eines Kolbens in einem Zylinder dargestellt. In Fig. 8 ist ein Magnetventil 62 ist als 3/2-Ventil ausgebildet und über hydraulische Leitungen 63, 64, 65, in denen sich Siebe 66 zur Reinigung des fließenden Mediums von möglichen Verschmutzungen befinden, mit einem Flüssigkeitstank 67 und mit einem Zylinder 68 verbunden, in dem ein einseitig unter dem Druck einer Feder 77 stehender Kolben 69 gleitet. Die Durchflussrichtungen des Mediums durch die Leitungen 63, 64, 65 sind durch nebenstehende Pfeile 70 angezeigt. In der Zuleitung 63 befindet sich eine von einem Motor M angetriebene Pumpe 71 und dieser, in Flussrichtung nachgeordnet, ein Anschluss für ein Druckbegrenzungsventil 72, das zur Vermeidung von Überdrücken im nachfolgenden System zwischen der Zuleitung 63 und der Ableitung 64 angeordnet ist. Eine elektrische Regeleinheit 73 ist mit dem Magnetventil 62 und dem Kolben 69 über elektrische Leitungen 74, 75 verbunden, wobei sich in der Leitung 75 ein Messwertumformer 76 befindet.
Durch die Pumpe 71 wird ein Druck von bspw. 200 bar und ein möglicher Volumenstrom von bspw. 1 Liter/min im System erzeugt. Das Druckbegrenzungsventil 72 öffnet sich beim Überschreiten des zulässigen Systemdrucks und lässt Medium in den Tank 67 abströmen bis sich der zulässige Systemdruck wieder eingestellt hat. Wenn das 3/2-Ventil 62 maximal bestromt (geschaltet) ist, fließt das Medium (Hydrauliköl) von der Pumpe 71 über das Ventil 62 in den Zylinder 68, und der Kolben 69 wird aus dem Zylinder heraus gedrückt. Die Verbindung vom Ventil 62 zum Tank 67 ist hierbei in oben beschriebener Weise geschlossen. Ist das Magnetventil 62 nicht bestromt (Ruhestellung), so fließt das Medium vom Zylinder 68 über das Ventil 62 ungedrosselt in den Tank 67, der Kolben 69 bewegt sich in den Zylinder 68 hinein. Die Verbindung zwischen Pumpe 71 und Ventil 62 ist dabei geschlossen.
Ist das Magnetventil 62 im Bereich I₀ < I < I₄ (Figuren 2-5) bestromt, befindet sich also der Schieber 34 im Regelbereich, so fließt das Medium vom Zylinder 68 über das Ventil 62 in den Tank 67. Dadurch fährt der Kolben 69 in den Zylinder 68 ein. Die Bewegung des Kolbens 69 wird bspw. durch das Gewicht eines nicht dargestellten Cabrio-Daches erzeugt. Infolge der Stellung des Schiebers 34 (in den Figuren 2-5) im Magnetventil (10) 62 und der damit entstandenen Drosselung stellt sich ein bestimmter Volumenstrom vom Zylinder 68 in den Flüssigkeitstank 67 ein. Dieser Volumenstrom ist direkt proportional zur Kolbengeschwindigkeit. Die Regeleinheit 73 vergleicht die am Kolben 69 gemessene Geschwindigkeit mit einem durch die Anwendung vorgegebenen Sollwert. Bei einer Abweichung errechnet die Regeleinheit 73 mit Hilfe vorhandener Daten (z. B. Geschwindigkeit, Zylinderabmessungen, momentaner Ventilstrom, Ventilkennlinie usw.) einen neuen Wert für den Volumenstrom durch das Ventil 62, der an das Ventil weitergegeben wird. Ist die gemessene Geschwindigkeit zu klein, so wird der Ventilstrom verringert. Demzufolge wird die Magnetkraft geringer, der Schieber 34 wird durch die Feder 42 (Figuren 2-5) zurückgedrängt, die Drosselung wird verringert, der Volumenstrom und damit die Kolbengeschwindigkeit wird entsprechend erhöht. Ist die gemessene Kolbengeschwindigkeit zu groß, so wird die Bestromung des Ventils 62 erhöht. Demzufolge wird die Magnetkraft größer, der Schieber 34 bewegt sich entgegen der Federkraft um einen entsprechenden Betrag, die Drosselung wird größer, der Volumenstrom und mit diesem die Zylindergeschwindigkeit wird verringert.
Die Zylindergeschwindigkeit kann konstant oder es kann ein festgelegter Geschwindigkeits-Zeitverlauf eingehalten werden.

In Fig.9 wird abweichend von Fig. 8 am Zylinder 68 eine Druckregelung vorgenommen. Zu dem Zweck führen Zuleitungen 631 und 632 zu Kammern 681 bzw. 682 des Zylinders 68. In der Zuleitung 631 befindet sich ein regelbares Magnetventil 621 und in der Zuleitung 632 ein Magnetventil 622 ohne Regelung. Beide sind im Beispiel 3/2-Magnetventile. Von den Ventilen 621 und 622 führen Rückleitungen 641 und 642 zum Tank 67. Von einer Regeleinheit 73 führen elektrische Leitungen 74 bzw. 751 und 752 zum Magnetventil 621 bzw. über Messwertumformer 761 und 762 zu den Kammern 681 und 682 des Zylinders 68. Im Übrigen gelten die bereits zu Fig. 8 genannten Bezeichnungen.
Es wird vorausgesetzt, dass die Pumpe 71 läuft, das Ventil 622 geschaltet ist und das Ventil 621 bestromt ist; dabei gilt unter Bezugnahme auf die Figuren 2-5 für den Strom I₀ < I < I₄, der Schieber 34 befindet sich also im Regelbereich. Das Medium fließt von der Pumpe 71 über das Ventil 622 in die Kammer 682 des Zylinders 68. Dadurch wird der Kolben 69 in der Zeichnung nach rechts gedrückt und das in der Kammer 681 befindliche Medium über das Ventil 621 in den Tank 67. Infolge der Stellung des Schiebers 34 im Magnetventil 621 und der damit entstehenden Drosselung des Medienstroms durch das Ventil 621 stellt sich in der Leitung 651 vom Zylinder 68 zum Ventil 621 ein bestimmter Druck ein. Der Druck in der Leitung 652 zwischen Ventil 622 und Zylinder 68 ist durch die Pumpe 71 bestimmt. Die Druckdifferenz zwischen den Leitungen 651 und 652 ist direkt proportional zur Zylinderkraft.
Die Regeleinheit 73 vergleicht die Druckdifferenz zwischen den Leitungen 651 und 652 mit einem vom Anwendungsfall abhängenden Sollwert. Weicht der gemessene Druck vom Sollwert ab, so errechnet die Regeleinheit 73 mit Hilfe der in ihr vorhandenen Daten einen neuen Wert für den Strom am Ventil 621 aus und gibt ihn an dieses Ventil weiter. Ist der gemessene Druck zu klein, wird der Strom am Ventil 621 erhöht. Dadurch vergrößert der Schieber 34 die Drosselung des Medienstroms um einen angemessenen Betrag, was eine hinreichende Erhöhung des Druckes und damit eine Erhöhung der Zylinderkraft zur Folge hat. Ist der gemessene Druck zu groß, wird der Strom am Ventil 621 verringert. Dies bewirkt eine Verringerung der Drosselung durch den Schieber 34 um einen entsprechenden Wert, was eine angepasste Verringerung des Druckes bis zum Druckgleichgewicht und damit auch eine Abnahme der Zylinderkraft zur Folge hat.
Es kann auch die Zylinderkraft konstant gehalten bzw. ein festgelegter Kraft-Zeitverlauf eingehalten werden. Auch eine Kraftbegrenzung ist möglich.

In den vorangehenden Ausführungen ist bei geöffneten Durchlässen die Magnetkraft ein Minimum, einschließlich Null, und bei geschlossenen Durchlässen ein Maximum. Umgekehrt kann im Rahmen der Erfindung die Magnetkraft auch bei geöffneten Durchlässen ein Maximum und bei geschlossenen Durchlässen ein Minimum, einschließlich Null, sein. Im letztern Fall ist ggf. eine fachmännische Variation im Ventilaufbau erforderlich.

### Bezugszeichenliste

- 10: Magnetventil
- 11: Elektromagnet
- 12: Steuereinrichtung
- 13: Gehäuse
- 14, 15: Anschlussöffnungen
- 16: Anschluss
- 17: Ende
- 18: Stifte
- 19: Wicklungsträger
- 20: Drahtspule
- 21: Umspritzung
- 22: Ansatz
- 23: Steckverbindung
- 24: Leitung
- 25: Hülse
- 26: Führungsrohr
- 27: Anker
- 28: Längsbohrung
- 29: Bügel
- 30, 51, 52, 53: Dichtringe
- 31: Stift
- 32: Axialbohrung
- 33: Innenraum
- 34: Schieber
- 35: Tankrücklauf
- 36: Zylinder (Verbraucher)
- 37: Schulter
- 38,47: Dichtkugeln
- 39,46,50: Dichtsitze
- 40, 68: Zylinder
- 41,41': Bohrungen
- 42: Schraubenfeder
- 43: Justierelement
- 44: Führungskörper
- 45: Stößel
- 46: Kugelführung
- 47: Zylinder
- 54, 56,70: Pfeile
- 55, 66: Siebe
- 57, 58, 59, 60, 61: Positionen des Schiebers
- 62: Magnetventil
- 63, 64,65: hydraulische Leitungen
- 67: Flüssigkeitstank
- 68: Zylinder
- 69: Kolben
- 71: Pumpe
- 72: Druckbegrenzungsventil
- 73: Regeleinheit
- 74, 75, 751, 752: elektrische Leitungen
- 76,761,762: Messwertumformer
- 77: Feder
- 631, 632, 651, 652: Zuleitungen
- 641, 642: Rückleitungen
- 681, 682: Kammern
- 621, 622: Magnetventile
- M: Motor

## Patentansprüche

1. Steuerbares Magnetventil (1), bei dem mindestens ein erster Dichtkörper (38) im Innenraum (33) eines Ventilgehäuses (13) in Wechselwirkung zwischen einer durch eine elektrische Bestromung hervorgerufene Magnetkraft und einer der Magnetkraft entgegen wirkenden Federkraft relativ zu einem ersten Dichtsitz (39) zwischen zwei Endlagen in axialer Richtung bewegt wird, wobei der Innenraum (33) sich von einem Elektromagneten (11) zu einem Anschluss (16) erstreckt und im Innenraum (13) sich ein Schieber (34) bewegt, der an einem Ende mit dem Elektromagneten (11) verbunden ist, wobei der erste Dichtkörper (38) sich am anderen Ende des Schiebers (34) befindet, **dadurch gekennzeichnet, dass** der erste Dichtsitz (39) zum ersten Dichtkörper (38) hin mit einem sich axial erstreckenden zylindrischen Gehäuse (40) versehen ist, in dem sich der Schieber (34) in Abhängigkeit von der elektrischen Bestromung axial verstellt, dass das zylindrische Gehäuse (40) radial gerichtete Durchlässe (41) derart aufweist, dass diese Durchlässe (41) verschlossen sind, wenn sich der erste Dichtkörper (38) in einer Endlage in seinem ersten Dichtsitz (39) oder in der unmittelbaren Nähe des ersten Dichtsitzes (39) befindet, und dass diese Durchlässe (41) geöffnet sind, wenn der erste Dichtkörper (38) sich in der entgegengesetzten Endlage befindet.

2. Steuerbares Magnetventil gemäß Anspruch 1, **dadurch gekennzeichnet, dass** das Maß der Öffnung der Durchlässe (41) beliebig wählbar und veränderbar ist.

3. Steuerbares Magnetventil gemäß Anspruch 1, **dadurch gekennzeichnet, dass** bei geöffneten Durchlässen (41) die Magnetkraft ein Minimum und in Schließstellung ein Maximum ist.

4. Steuerbares Magnetventil gemäß Anspruch 1, **dadurch gekennzeichnet, dass** bei geöffneten Durchlässen (41) die Magnetkraft ein Maximum und in Schließstellung ein Minimum ist.

5. Steuerbares Magnetventil gemäß Anspruch 1, **dadurch gekennzeichnet, dass** der Schieber (34) von einer Schraubenfeder (42) umgeben ist, die sich einerseits am zylindrischen Gehäuse (40) und andererseits am Schieber (34) abstützt.

6. Magnetventil gemäß Anspruch 5, **dadurch gekennzeichnet, dass** der Schieber (34) an seinem, dem Elektromagneten (11) zugekehrten Ende mit einem verstellbaren Justierelement (43) versehen ist.

7. Steuerbares Magnetventil gemäß Anspruch 1, **dadurch gekennzeichnet, dass** relativ zum ersten Dichtsitz (39) auf der dem ersten Dichtkörper (38) abgewandten Seite ein zweiter Dichtsitz (46) für einen zweiten Dichtkörper (47) vorgesehen ist, der vom ersten Dichtkörper (38) aus dem zweiten Dichtsitz (46) mittels eines Stößels (45) abgehoben ist, wenn sich der erste Dichtkörper (38) in seinem ersten Dichtsitz (39) befindet.

## Claims

1. Controllable solenoid valve (1) in which, due to the interaction between a magnetic force caused by an electrical flow and a spring force acting against the magnetic force at least one first sealing body (38) in the interior (33) of a valve housing (13) is displaced relative to a first sealing seat (39) in axial direction between two final positions, whereby the interior (33) extends from an electromagnet (11) to a connection (16) and a slide (34), being connected at its one end to the electromagnet (11), is moved in the interior (33), whereby the first sealing body (38) is located at the other end of the slide (34), wherein the first sealing seat (39) is provided with an axially extending cylindrical housing (40) up to the first sealing body (38), whereby inside said housing (40) the slide (34) is axially displaced depending on the electrical flow, the cylindrical housing (40) comprises radially oriented passages (41) which are closed if the first sealing body (38) is located in a final position in its first sealing seat (39) or in the immediate vicinity of the first sealing seat (39) and they are open if the first sealing body (38) is located in the opposite final position.

2. Controllable solenoid valve according to claim 1, wherein the size of the opening of the passages (41) is freely selectable and adjustable.

3. Controllable solenoid valve according to claim 1, wherein the magnetic force has its minimum value if the passages (41) are open and it has its maximum value if they are closed.

4. Controllable solenoid valve according to claim 1, wherein the magnetic force has its maximum value if the passages (41) are open and it has its minimum value if they are closed.

5. Controllable solenoid valve according to claim 1, wherein the slide (34) is surrounded by a helical spring (42) which is supported at the cylindrical housing (40) at one side and at the slide (34) at its other side.

6. Controllable solenoid valve according to claim 5, wherein the slide (34) is provided with an adjusting element (43) at its end facing the electromagnet (11).

7. Controllable solenoid valve according to claim 1, wherein relative to the first sealing seat (39) on the side turned away from the first sealing body (38) a second sealing seat (46) is provided for a second sealing body (47) which is lifted from the first sealing body (38) out of the second sealing seat (46) by means of a bolt (45), if the first sealing body (38) is located in its first sealing seat (39).

## Revendications

1. L'électrovanne réglable (1), sur laquelle au moins une première pièce assurant l'étanchéité (38) située dans l'espace intérieur (33) d'une boîtier à clapet (13) se déplace dans le sens axial, entre deux positions extrêmes, par l'interaction d'une force magnétique apparaissant après l'application d'un courant électrique, d'une part, et d'un effet de ressort agissant dans le sens opposé de la force magnétique, d'autre part, et de manière relative par rapport à une première siège d'étanchéité (39), l'espace intérieur (33) s'étendant depuis une électrovanne (11) à un raccord (16) et dans l'espace intérieur (13) se déplace un tiroir (34) dont l'une de ses extrémités étant reliée à un électroaimant (11) et à la première pièce assurant l'étanchéité (38) étant située sur l'autre extrémité du tiroir (34), est **caractérisée en ce que** la première siège d'étanchéité (39) est dotée d'un boîtier cylindrique (40) étant positionné dans le sens axial, au sein duquel le tiroir (34) se déplace dans le sens axial en fonction de l'application axiale du courant électrique, que le boîtier cylindrique (40) est doté des passages (41) orientés dans le sens radial de manière que ces passages (41) soient obturés dans le cas où la première pièce d'étanchéité (38) se trouvant dans sa position extrême, se situe dans sa première siège d'étanchéité (49) ou à proximité immédiate de celle-ci (39) et que ces passages (41) soient ouverts dans le cas où la première pièce assurant l'étanchéité (38) se trouve située dans la position extrême opposée.

2. L'électrovanne régulable (1) suivant la revendication 1 est **caractérisée en ce que** la dimension de l'ouverture des passage (41) peut être choisie librement et peut varier.

3. L'électrovanne réglable (1) suivant la revendication 1 est **caractérisée en ce que** dans le cas où les passages (41) sont ouverts, l'importance de la force magnétique atteint son minimum et dans le cas où les passages (41) sont obturés, l'importance de la force magnétique atteint son maximum.

4. L'électrovanne réglable (1) suivant la revendication 1 est **caractérisée en ce que** dans le cas où les passages (41) sont ouverts l'importance de la force magnétique atteint son maximum et dans le cas où les passages (41) sont obturés l'importance de la force magnétique atteint son minimum.

5. L'électrovanne réglable (1) suivant la revendication 1 est **caractérisée en ce que** le tiroir (34) est entouré d'un ressort cylindrique (42) qui d'un côté s'appuie sur le boîtier cylindrique (40) et de l'autre côté sur le tiroir (34).

6. L'électrovanne réglable (1) suivant la revendication 5 est **caractérisée en ce que** l'extrémité du tiroir (34) orientée vers l'électroaimant (11) est dotée d'un organe d'ajustage réglable (43).

7. L'électrovanne réglable (1) suivant la revendication 1 est **caractérisée en ce que** par rapport à la première siège d'étanchéité (39), sur le côté opposé à la première pièce assurant l'étanchéité (38), est prévue une deuxième siège d'étanchéité (46) pour supporter la deuxième pièce assurant l'étanchéité (47) qui moyennant d'une tige poussoir (45), est soulevée de la deuxième siège d'étanchéité (46) et ainsi écartée de la première pièce d'étanchéité (38) dans le cas où la première pièce assurant l'étanchéité (38) est logée dans sa première siège d'étanchéité (39).
